(19) **Europäisches Patentamt / European Patent Office / Office européen des brevets**

(11) **EP 2 160 312 B1**

(12) # FASCICULE DE BREVET EUROPEEN

(45) Date de publication et mention
de la délivrance du brevet:
**10.08.2011 Bulletin 2011/32**

(21) Numéro de dépôt: **08805915.9**

(22) Date de dépôt: **03.06.2008**

(51) Int Cl.:
*B60W 20/00* (2006.01)    *B60W 10/26* (2006.01)
*B60K 6/28* (2007.10)    *B60T 1/10* (2006.01)
*G01R 31/36* (2006.01)    *G01R 27/08* (2006.01)

(86) Numéro de dépôt international:
**PCT/FR2008/050972**

(87) Numéro de publication internationale:
**WO 2009/001001 (31.12.2008 Gazette 2009/01)**

(54) **PROCEDE DE PILOTAGE DE SYSTEME MICRO-HYBRIDE POUR VEHICULE, AINSI QU'UNITE DE STOCKAGE D'ENERGIE ET SYSTEME HYBRIDE POUR LA MISE EN OEUVRE DE CELUI-CI**

VERFAHREN ZUR ANSTEUERUNG EINES MIKROHYBRIDSYSTEMS FÜR EIN FAHRZEUG UND ENERGIESPEICHEREINHEIT SOWIE HYBRIDSYSTEM ZU SEINER UMSETZUNG

METHOD FOR DRIVING A MICRO-HYBRID SYSTEM FOR VEHICLE AND AN ENERGY STORAGE UNIT, AND HYBRID SYSTEM FOR IMPLEMENTING SAME

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.06.2007 FR 0756124**

(43) Date de publication de la demande:
**10.03.2010 Bulletin 2010/10**

(73) Titulaire: **Valeo Equipements Electriques Moteur 94046 Créteil Cedex (FR)**

(72) Inventeurs:
- **RANIER, Marc**
  **F-94290 Villeneuve Le Roi (FR)**
- **MATT, Jean-Claude**
  **F-21000Dijon (FR)**
- **SARDAT, Pierre**
  **F-93340 Le Raincy (FR)**

(56) Documents cités:
**EP-A- 1 096 636      EP-A- 1 744 433
US-A- 5 281 919      US-A- 5 625 272
US-A1- 2002 140 405    US-B1- 6 232 744**

## Description

DOMAINE TECHNIQUE DE L'INVENTION

La présente invention est applicable de manière générale dans le domaine automobile.

Plus particulièrement, l'invention concerne un procédé de pilotage d'un système micro-hybride à freinage récupératif pour véhicule, le système comprenant une unité de stockage d'énergie électrique et une unité de commande électronique, l'unité de stockage d'énergie électrique comprenant une pluralité de cellules élémentaires montées en série.

L'invention concerne également un système micro-hybride à freinage récupératif et une unité de stockage d'énergie électrique conçus pour une mise en oeuvre du procédé.

ARRIERE-PLAN TECHNOLOGIQUE DE L'INVENTION

Pour réduire la consommation de carburant des véhicules automobiles et par voie de conséquence la pollution qu'ils génèrent, il est connu d'équiper un véhicule d'un système micro-hybride, par exemple à alterno-démarreur, autorisant un mode de freinage récupératif.

Un tel système est connu du document US 2002/0140405 et montre toutes les caractéristiques du préambule de la revendication 1.

Il est également connu de l'entité inventive, un système micro-hybride du type ci-dessus comportant une machine électrique tournante réversible, un convertisseur alternatif-continu réversible, une unité de stockage d'énergie électrique et un convertisseur de tension continu-continu réversible.

L'unité de stockage d'énergie électrique est formée d'une pluralité de condensateurs de très grande capacité appelés «supercondensateur», «ultra-capacité» ou «UCAP» par l'homme du métier.

L'énergie électrique récupérée au moyen de la machine électrique tournante est stockée dans les supercondensateurs et est restituée ensuite pour différents usages, notamment pour alimenter des consommateurs sous une tension continue flottante supérieure à la tension batterie.

Compte tenu des valeurs nominales de tension disponibles actuellement pour les supercondensateurs, il est connu d'assembler ceux-ci en série de manière à former un pack de supercondensateurs apte à supporter les valeurs de tension habituellement présentes dans un système micro-hybride à freinage récupératif comme indiqué ci-dessus.

Dans ce système, les disparités existant sur les valeurs nominales de tension et de capacité des supercondensateurs ont amené les concepteurs à prévoir des circuits électroniques d'équilibrage.

Ces circuits électroniques d'équilibrage ont essentiellement pour fonction de protéger les supercondensateurs contre des tensions de charge trop élevées pouvant provoquer des claquages en tension ou un vieillissement prématuré de l'unité capacitive, ainsi que contre des éventuelles inversions de tension aux bornes des supercondensateurs qui peuvent avoir des conséquences destructrices y compris sur les circuits électroniques connectés aux bornes des supercondensateurs.

Une certaine homogénéité entre les tensions de charge des différents supercondensateurs, facilitant l'exploitation de l'unité capacitive, est obtenue grâce à ces circuits d'équilibrage.

Ainsi, par exemple, dans le cas où le véhicule ne serait pas utilisé sur de longues périodes de temps, les circuits d'équilibrage continuent à assurer une décharge du pack de supercondensateurs de manière symétrique, idéalement jusqu'à 0 Volt. Il est souhaitable en effet que le pack de supercondensateurs reste toujours équilibré (surtout à très basse tension), car lorsque le véhicule est remis en marche le besoin de recharger au plus vite le pack de supercondensateurs peut avoir des conséquences destructrices, du fait de déséquilibres importants, si la décharge n'a pas été correctement accompagnée jusqu'à des valeurs très basses (par exemple 2 V).

L'introduction des circuits d'équilibrage a donc permis une avancée technique en termes de fiabilité et de durée de vie des packs de supercondensateurs.

Cependant, il est aujourd'hui souhaitable de proposer de nouvelles solutions autorisant, d'une part, un accroissement supplémentaire de la durée de vie de l'unité capacitive dans le système micro-hybride à freinage récupératif et, d'autre part, une meilleure exploitation des possibilités de l'unité capacitive en tant que composant majeur du système micro-hybride à freinage récupératif.

DESCRIPTION GENERALE DE L'INVENTION

Selon un premier aspect, le présente invention a pour objet de fournir un procédé de pilotage d'un système micro-hybride à freinage récupératif d'un type nouveau, qui autorise une meilleure optimisation du système en offrant la possibilité d'un pilotage dans lequel l'état effectif de l'unité de stockage d'énergie électrique est pris en compte.

Le procédé de pilotage d'un système micro-hybride à freinage récupératif selon l'invention est mis en oeuvre dans un système micro-hybride comprenant une unité de stockage d'énergie électrique et une unité de commande électronique, l'unité de stockage d'énergie électrique comprenant une pluralité de cellules élémentaires montées en série, le procédé comprenant les étapes de lire des tensions électriques élémentaires des cellules élémentaires, et déduire des informations d'état de l'unité de stockage d'énergie électrique à partir des tensions élémentaires lues.

Conformément à l'invention, les informations d'état comprennent une information d'état de santé comportant une différence de tension entre la cellule élémentaire la plus chargée et la cellule élémentaire la moins chargée de l'unité de stockage d'énergie électrique, l'information d'état de santé étant représentative de l'aptitude de l'unité de stockage d'énergie électrique à remplir sa fonction dans le système micro-hybride, et le procédé comprend une étape de prendre en compte, dans l'unité de commande électronique, les informations d'état incluant l'information d'état de santé pour définir un pilotage optimal du système micro-hybride.

Le procédé selon l'invention, tel que décrit brièvement ci-dessus, trouve une application privilégiée dans un système micro-hybride à freinage récupératif dans lequel l'unité de stockage d'énergie électrique est un pack de supercondensateurs. Le procédé selon l'invention pourra cependant trouver des applications dans des systèmes où l'unité de stockage d'énergie électrique est constituée de cellules d'accumulateur.

Selon des modes de réalisation particuliers, le procédé selon l'invention peut comporter également l'une ou plusieurs des caractéristiques suivantes :

- les informations d'état comprennent une tension élémentaire maximum provenant de la cellule élémentaire la plus chargée;
- les informations d'état comprennent une tension élémentaire minimum provenant de la cellule élémentaire la moins chargée;
- les informations d'état comprennent une mesure de la température dans l'unité de stockage d'énergie électrique ;
- les informations d'état comprennent une information de capacité différentielle représentative d'un écart maximum de capacité électrique entre les cellules élémentaires;
- le procédé comprend également les étapes de : mesurer pendant une durée prédéterminée dans l'unité de stockage d'énergie électrique un courant prédéterminé traversant les cellules élémentaires, et déduire, au terme de la durée prédéterminée, l'information de capacité différentielle à partir d'une différence de tension maximum détectée entre les tensions élémentaires lues et à partir de la mesure de courant pendant la durée prédéterminée;
- les informations d'état comprennent une information de résistance parasite différentielle représentative d'un écart maximum de résistance parasite entre les cellules élémentaires;
- le procédé comprend également les étapes de : déduire une première différence de tension maximum entre les cellules élémentaires à partir des tensions élémentaires lues lorsque aucun courant significatif ne circule dans l'unité de stockage d'énergie électrique, injecter dans l'unité de stockage d'énergie électrique un courant prédéterminé pendant une durée courte prédéterminée, déduire une seconde différence de tension maximum entre les cellules élémentaires à partir des tensions élémentaires lues pendant l'injection de courant, et déduire l'information de résistance parasite différentielle à partir d'une différence entre les première et seconde différences de tension et à partir de la valeur d'intensité du courant de durée courte.

Selon un second aspect, l'invention concerne une unité de stockage d'énergie électrique apte à une mise en oeuvre du procédé de l'invention brièvement décrit ci-dessus.

Selon un mode de réalisation préférée, l'unité de stockage d'énergie électrique comprend une pluralité d'éléments supercondensateurs formant des cellules élémentaires montées en série et des moyens électroniques.

De manière remarquable, l'unité de stockage d'énergie électrique selon l'invention comporte également des moyens supplémentaires la rendant apte à une mise en oeuvre du procédé de l'invention brièvement décrit ci-dessus.

Selon une caractéristique additionnelle, ces moyens supplémentaires comportent des circuits électroniques aptes à délivrer au moins un signal convoyant au moins une desdites informations d'état, ce signal étant destiné à être transmis vers l'unité de commande électronique.

Selon un troisième aspect, l'invention concerne aussi un signal de transmission délivré par des circuits électroniques compris dans l'unité de stockage d'énergie électrique décrite brièvement ci-dessus.

Selon une première forme de réalisation particulière, le signal selon l'invention comporte une composante d'information utile convoyant au moins une information d'état et une composante de décalage apte à autoriser une détection d'un défaut de continuité électrique dans un support de transmission de signal et/ou à s'opposer à des effets de corrosion de contact dans au moins un connecteur du système.

Selon une seconde forme de réalisation particulière, le signal selon l'invention est du type à modulation de largeur d'impulsion (MLI).

Selon d'autres aspects, l'invention concerne également un système micro-hybride à freinage récupératif comprenant des moyens le rendant apte à une mise en oeuvre du procédé de l'invention décrit brièvement ci-dessus, ainsi qu'un véhicule équipé d'un tel système.

L'unité de stockage d'énergie électrique telle que brièvement décrite ci-dessus est intégrée avantageusement dans le système micro-hybride à freinage récupératif de l'invention.

Par ailleurs, le système micro-hybride selon l'invention peut comprendre une ou plusieurs des caractéristiques suivantes :

- moins une unité de commande électronique apte à traiter des informations d'état déduites par la mise en oeuvre du procédé décrit brièvement ci-dessus;
- outre les unité de stockage d'énergie électrique et unité de commande électronique, le système comporte également une machine électrique tournante, un convertisseur alternatif-continu et un convertisseur continu-continu;

- l'unité de commande électronique est comprise au moins partiellement dans le convertisseur alternatif-continu et/ou le convertisseur continu-continu.

D'autres avantages et caractéristiques de la présente invention apparaîtront plus clairement à la lecture de la description ci-dessous de plusieurs formes de réalisation particulières en référence aux dessins annexés, dans lesquels :

BREVE DESCRIPTION DES DESSINS

- la Fig.1 est un bloc-diagramme général d'une forme de réalisation particulière d'un système micro-hybride à freinage récupératif selon l'invention; et
- la Fig.2 est un schéma simplifié d'une unité capacitive de stockage d'énergie électrique incluse dans le système de la Fig.1.

DESCRIPTION DE FORMES DE REALISATION PARTICULIERES DE L'INVENTION

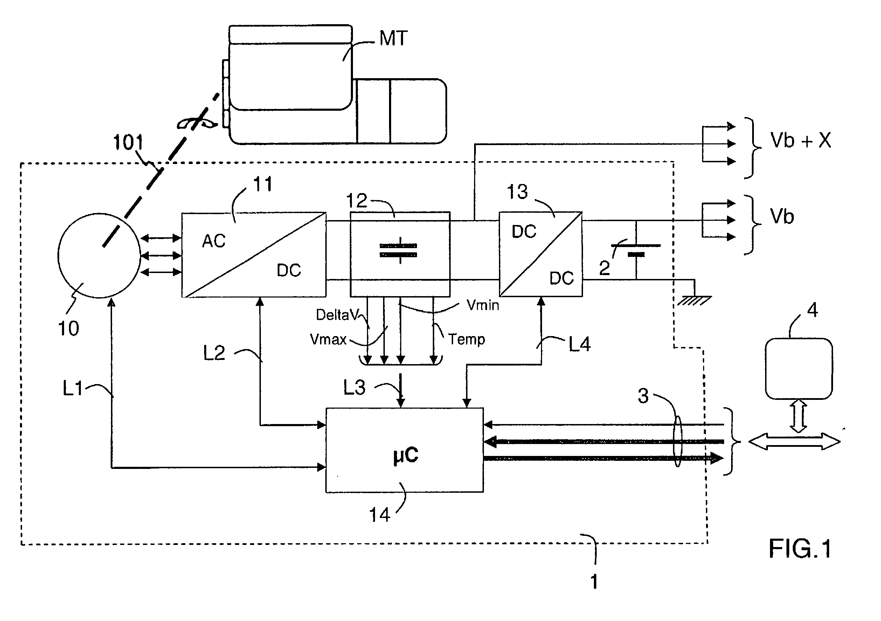

En référence à la Fig.1, il est maintenant décrit une forme de réalisation particulière 1 d'un système micro-hybride à freinage récupératif selon l'invention.

Comme montré à la Fig.1, dans cette forme de réalisation particulière, le système micro-hybride 1 selon l'invention comprend essentiellement une machine électrique tournante 10, un convertisseur alternatif-continu (AC/DC) réversible 11, une unité capacitive de stockage d'énergie électrique 12, un convertisseur de tension continu-continu (DC/DC) 13 et un microcontrôleur 14.

Le système micro-hybride 1 est relié à un réseau de bord bi-tension du véhicule capable de fournir une tension continue basse Vb et une tension continue haute flottante Vb+X.

La tension continue basse Vb est généralement celle de 12 V d'une batterie au plomb 2 équipant le véhicule. De préférence, la tension Vb pourra être utilisée pour alimenter dans le véhicule des consommateurs demandant une valeur de tension relativement stable, tels que les dispositifs d'éclairage et de signalisation.

Dans cette forme particulière de réalisation particulière, la tension continue Vb+X varie par exemple entre 12 et 60 V et est disponible aux bornes de l'unité capacitive de stockage d'énergie 12 dont la charge en tension est dépendante notamment du fonctionnement en freinage récupératif de la machine électrique tournante 10.

La tension Vb+X peut être utilisée prioritairement pour alimenter des consommateurs acceptant une tension variable tels que par exemple un dispositif de dégivrage. Cependant, dans certaines applications, la tension Vb+X pourra aussi être utilisée pour alimenter, à travers un convertisseur DC-DC dédié (non représenté), un consommateur demandant une tension continue stable, par exemple un dispositif autoradio alimenté sous 12 V. De plus, la tension Vb+X dans certaines applications est aussi utilisable pour alimenter avec une tension supérieure à 12 V la machine électrique tournante 10 fonctionnant en mode démarreur ou moteur.

Comme cela est représenté à la Fig.1, la machine électrique tournante 10 est couplée mécaniquement, liaison 101, à un moteur thermique MT du véhicule. La machine 10 est ici une machine triphasée de type alterno-démarreur qui, outre les modes de fonctionnement en démarreur et alternateur, est apte à fonctionner également en mode de freinage récupératif et en mode d'assistance en couple. Dans le mode d'assistance en couple, la machine 10 fournit un couple mécanique additionnel pour la traction du véhicule en complément de celui fourni par le moteur thermique MT.

Le convertisseur AC/DC 11 est un dispositif réversible et permet, lorsque la machine électrique tournante 10 doit fonctionner en mode moteur/démarreur, une alimentation de la machine 10 avec des tensions alternées triphasées obtenues à partir d'une tension continue présente aux bornes de l'unité capacitive de stockage d'énergie 12, et, lorsque la machine électrique tournante 10 doit fonctionner en mode alternateur, un redressement sous la forme d'une tension continue redressée des tensions triphasées fournies par la machine 10. Cette tension continue redressée charge l'unité capacitive de stockage d'énergie 12 et, à travers le convertisseur DC-DC 13, la batterie 2.

L'unité capacitive de stockage d'énergie 12 est ici formée essentiellement d'un pack de supercondensateurs équipés de circuits électroniques appropriés. Pour des raisons de commodité, l'unité capacitive de stockage d'énergie 12 est désignée « pack de supercondensateurs » dans la suite de la description.

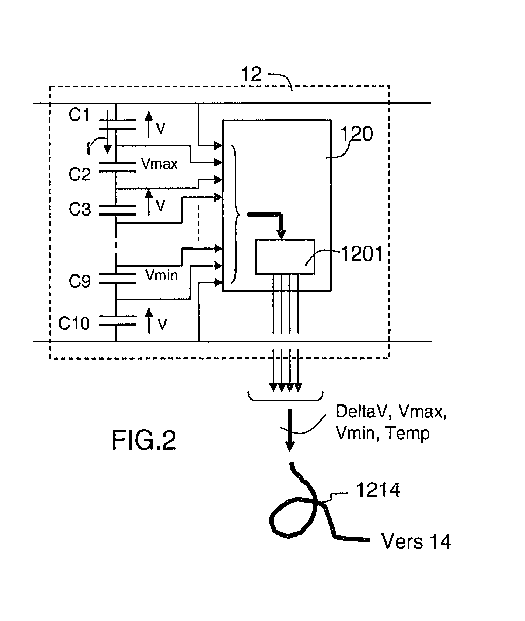

Le pack de supercondensateurs 12 est décrit en détail par la suite en référence à la Fig.2, et comporte, dans cette forme de réalisation, dix éléments supercondensateurs C1 à C10 montés en série.

Le pack de supercondensateurs 12 autorise, en se chargeant à la tension continue délivrée par le convertisseur AC/DC 11, un stockage d'énergie électrique lorsque la machine électrique tournante 10 fonctionne en mode de freinage récupératif ou en mode alternateur. L'énergie stockée dans le pack de supercondensateurs 12 peut être restituée sur le réseau de tension Vb+X pour alimenter différents consommateurs et, dans certains cas, sur le réseau de tension Vb, à travers le convertisseur DC/DC 13, par exemple lorsque la machine 10 ne débite pas et que la batterie 2 est incapable de répondre à une sollicitation de pic de courant sur le réseau de tension Vb. De plus, l'énergie stockée dans le pack de supercondensateurs 12, comme déjà indiqué plus haut, peut être utilisée pour un démarrage du moteur thermique ou une assistance en couple de celui-ci sous une tension Vb+X qui peut être très sensiblement supérieure aux 12 V classiques, facilitant ainsi une fourniture par la machine tournante 10 de couples mécaniques importants requis dans le cas de gros moteurs thermiques.

Le convertisseur DC/DC 13 est un dispositif réversible et permet, d'une part, un transfert d'énergie vers le réseau de tension Vb pour alimenter les consommateurs et charger la batterie 2 et, d'autre part, un transfert d'énergie dans le sens inverse à partir de la tension 12V de la batterie 2 pour charger le pack de supercondensateurs 12 si nécessaire et alimenter le convertisseur AC/DC 11 lorsque la machine tournante 10 fonctionne en moteur / démarreur.

Le microcontrôleur 14 gère le fonctionnement du système micro-hybride 1 à partir d'informations représentatives de l'état interne du système micro-hybride 1 et de l'état du véhicule. Un module de stratégies de pilotage est implémenté dans le microcontrôleur 14 de manière à piloter le système micro-hybride 1. Des informations d'état et des commandes peuvent être échangées entre le microcontrôleur 14 et différents éléments fonctionnels du système micro-hybride 1 à travers des liaisons d'échange de signaux. Des liaisons d'échange de signaux L1, L2, L3 et L4 entre le microcontrôleur 14 et les éléments 10, 11, 12 et 13 sont représentées à la Fig.1.

Comme montré aussi à la Fig.1, un bus de communication de données 3, par exemple de type CAN, est également prévu pour des échanges d'information entre le système micro-hybride 1 et une ou plusieurs unités électroniques de commande (ECU) 4 du véhicule. Des informations telles qu'un appui sur la pédale de frein ou sur la pédale d'accélérateur peuvent ainsi être transmises au système micro-hybride 1 par une unité ECU 4 à travers le bus de communication de données 3.

En référence plus particulièrement à la Fig.2, il est maintenant décrit en détail le pack de supercondensateurs 12 en tant qu'unité de stockage d'énergie électrique et sa liaison d'échange de signaux L3 avec le microcontrôleur 14.

Comme montré à la Fig.2, le pack de supercondensateurs 12 comporte essentiellement, dans cette forme de réalisation, dix éléments supercondensateurs C1 à C10 montés en série ainsi que des circuits électroniques 120. Ces éléments supercondensateurs C1 à C10 forment autant de cellules élémentaires montées en série et comprises dans le pack 12.

Des circuits d'équilibrage, intégrés dans les circuits 120, sont donc prévus de manière à équilibrer les tensions aux bornes des éléments supercondensateurs et éviter ainsi des dépassements de tension susceptibles de provoquer des claquages ou un vieillissement prématurés de ces éléments. Des circuits d'équilibrage pour les assemblages d'éléments supercondensateurs sont connus de l'homme du métier et ceux-ci ne seront pas décrits dans la présente demande.

Conformément à la présente invention, dans cette forme de réalisation, les circuits 120 comportent également des circuits de mesure et d'interface 1201 aptes à produire des signaux de santé et de pilotage du pack 12, à savoir, des signaux DeltaV, Vmax, Vmin et Temp qui vont être décrits en détail dans les paragraphes ci-après.

Les signaux DeltaV, Vmax, Vmin et Temp sont transmis au microcontrôleur 14 à travers la liaison L3 établie à travers un support de transmission de signal 1214. Les signaux DeltaV, Vmax, Vmin et Temp permettent au microcontrôleur 14 de gérer de manière optimale le pack de supercondensateurs 12.

Comme cela apparaîtra plus clairement par la suite, le signal DeltaV porte une information relative à l'état de santé du pack de supercondensateurs 12. Les signaux Vmax, Vmin et Temp portent quant à eux des informations relatives à l'état électrique du pack de supercondensateurs 12 et facilitent le pilotage de celui-ci.

Conformément à l'invention, on lit les tensions élémentaires présentes aux bornes de chacun des éléments supercondensateurs C1 à C10 et on déduit une information d'état de santé, c'est-à-dire, une information représentative de l'aptitude du pack de supercondensateurs à remplir sa fonction dans le système micro-hybride, à partir des décalages en tension présents entre les éléments supercondensateurs. Cette information d'état de santé du pack 12 est portée par le signal DeltaV qui indique la différence de tension entre l'élément supercondensateur qui est le plus chargé et celui qui est le moins chargé. A titre d'exemple, à la Fig.2, l'élément C2. aux bornes duquel est présente la tension Vmax, est l'élément supercondensateur le plus chargé et l'élément C9, aux bornes duquel est présente la tension Vmin, est l'élément supercondensateur le moins chargé.

Des essais réalisés par l'entité inventive montrent que plus les éléments supercondensateurs vieillissent et plus sont élevées les différences sur leurs propriétés électriques, notamment sur les valeurs de courant de fuite et les valeurs capacitives. En fin de vie du pack de supercondensateurs, ces différences finissent par rendre difficile, voir impossible, l'utilisation de celui-ci.

Le signal DeltaV permet au microcontrôleur 14 :

- d'effectuer une mesure des écarts de capacité, de résistance interne et des écarts de courant de fuite entre les éléments supercondensateurs,
- d'être en mesure d'informer le système véhicule sur le fait que le pack de supercondensateurs est sur le point de défaillir, ou est en état de défaillance, et
- de décider de façon optimale de la manière d'utiliser le pack de supercondensateurs pendant toute sa durée de vie, sachant que la dégradation des propriétés du pack de supercondensateurs en fin de vie peut être lente, en ajustant la stratégie de pilotage du système micro-hybride de manière à prolonger la vie du pack de supercondensateurs.

Le signal Vmax permet au microcontrôleur 14 de connaître la valeur de tension présente aux bornes du plus chargé (C2 dans l'exemple de la Fig.2) des éléments supercondensateurs. Connaissant cette valeur Vmax, le microcontrôleur 14 peut influer sur la valeur maximale de la tension de charge du pack de supercondensateurs, de manière à ne pas risquer de provoquer une surtension destructrice sur l'un des éléments du pack de supercondensateurs, ou de provoquer le vieillissement prématuré de l'un d'eux ou de plusieurs d'entre eux. Tant que le pack de supercondensateurs est en «bonne santé», l'utilisation de cette information n'est pas vitale car la différence DeltaV est faible, mais elle le devient progressivement au fur et à mesure que le pack de supercondensateurs vieillit.

Le signal Vmax permet également au microcontrôleur 14 de connaître avec précision la valeur de tension aux bornes du moins chargé des éléments supercondensateurs, en effectuant la différence entre les deux signaux Vmax et DeltaV. Cette information est utile notamment lors des phases de décharge profonde. En effet, lors de ces phases, il est souhaitable de ne pas provoquer l'apparition d'une tension négative aux bornes d'un élément supercondensateur qui était peu chargé au départ, car cela pourrait avoir pour conséquence un vieillissement prématuré de l'élément concerné ou une détérioration de l'électronique de mesure.

Le signal Vmin permet au microcontrôleur 14 de connaître la valeur de tension présente aux bornes du moins chargé (C9 dans l'exemple de la Fig.2) des éléments supercondensateurs. L'information portée par le signal Vmin est redondante avec celle qui peut être obtenue en effectuant l'opération de soustraction Vmax - DeltaV. Cependant, le signal Vmin peut permettre d'assurer un contrôle de cohérence sur la validité des deux autres signaux DeltaV et Vmax et de suppléer, en cas de défaillance, à l'un d'entre eux.

Le signal Temp permet au microcontrôleur 14 de connaître la température du pack de supercondensateurs. Cela permet au microcontrôleur 14 d'ajuster en temps réel une stratégie de pilotage en tension de manière à préserver au mieux la santé du pack de supercondensateurs qui généralement supporte mal les trop fortes températures (vieillissement ou destruction). Par exemple, la tension d'utilisation peut ainsi être abaissée en cas de tension élevée.

Conformément à l'invention, les signaux DeltaV, Vmax, Vmin et Temp sont produits dans le pack de supercondensateurs 12 à l'aide de moyens électroniques appropriés. Les signaux Vmax et Vmin peuvent être obtenus par exemple au moyen d'un circuit de comparaison de tensions (non représenté) inclus dans les circuits 1201. Les signaux DeltaV et Temp peuvent être obtenus par exemple au moyen d'un circuit soustracteur et d'un circuit de mesure de température (non représentés) également inclus dans les circuits 1201.

Dans la forme de réalisation particulière décrite ici d'un pack comprenant plusieurs supercondensateurs assemblés en série, un mauvais fonctionnement ou la défaillance d'un seul des éléments supercondensateurs n'est pas forcément détectable au niveau du pack de supercondensateurs complet, car ce mauvais fonctionnement ou défaillance risque d'être masqué par le bon fonctionnement des autres éléments supercondensateurs.

Conformément à l'invention, outre les utilisations décrites ci-dessus des signaux DeltaV, Vmax et Vmin pour convoyer des informations simples de pilotage et de santé relatives au pack de supercondensateurs 12, il est également possible d'employer ces signaux pour réaliser des mesures d'écarts sur les valeurs de capacité entre les éléments supercondensateurs ainsi que sur les valeurs de résistances parasites équivalentes série. Cela permet d'observer la dégradation des caractéristiques électrochimiques d'un seul élément supercondensateur parmi plusieurs, ce qui serait impossible par une mesure globale.

Mesure de capacité différentielle entre les éléments supercondensateurs :

Pour réaliser cette mesure de capacité différentielle, il est mesuré un courant I, montré à la Fig.1, circulant dans le pack de supercondensateurs 12. Le courant I a par exemple une intensité déterminée de l'ordre de 20 A.

Le microcontrôleur 14 mesure la variation de tension sur le signal DeltaV pendant une durée T et peut ainsi déduire les écarts maximum de valeur capacitive entre les éléments supercondensateurs, en utilisant l'égalité DeltaC = $[\int_0^T I.dt]$/[DeltaV(T)-DeltaV(0)], DeltaC étant la mesure de capacité différentielle.

A partir des mesures de capacité différentielle réalisées, le microcontrôleur 14 construit un modèle électrique partiel interne du pack de supercondensateurs 12 et peut ainsi anticiper les performances de celui-ci afin d'optimiser son utilisation.

Mesure de résistance parasite série différentielle entre les éléments supercondensateurs :

Pour réaliser cette mesure de résistance parasite série différentielle, le microcontrôleur 14 commande deux mesures de DeltaV successives.

Une première mesure est réalisée avec aucun courant significatif circulant dans le pack de supercondensateurs 12 et permet d'obtenir une première valeur $DeltaV_1$.

Une deuxième mesure est réalisée avec un courant de forte amplitude I circulant dans le pack de supercondensateurs 12 et permet d'obtenir une seconde valeur $DeltaV_2$. Le courant I a par exemple une intensité déterminée de l'ordre de 200 A. Le courant I est injecté dans le pack de supercondensateurs 12 pendant une courte durée t au terme de laquelle la valeur $DeltaV_2$ est mesurée. Une forte valeur du courant I est préférable afin de détecter un accroissement de tension suffisant pour effectuer des mesures aux bornes des éléments supercondensateurs. Cependant, le courant I injecté doit être de courte durée de manière à minimiser la composante due à la charge de l'élément supercondensateur dans l'accroissement de tension, au profit de la composante due à la résistance série de ce même élément.

La valeur de résistance parasite série différentielle est ensuite calculée par le microcontrôleur 14 en déterminant la différence entre DeltaV$_1$ et DeltaV$_2$ et en divisant celle-ci par la valeur du courant I injecté dans le pack de supercondensateurs 12.

On peut ainsi détecter un déséquilibre anormal entre les résistances parasites des éléments supercondensateurs ou de leurs liaisons électriques de puissance à l'intérieur du pack 12, et en déduire une menace prévisible de défaillance, ou une défaillance avérée, sur un seul ou plusieurs éléments supercondensateu rs.

Il est maintenant décrit trois exemples de procédés compatibles avec l'invention pour transmettre les informations DeltaV, Vmax, Vmin et Temp du pack de supercondensateur1 12 vers le micro-ordinateur 14.

Etant donnée la nature des informations à transmettre et les valeurs importantes de capacité (typiquement 2000 Farads pour chaque élément supercondensateur), une bande passante de l'ordre de quelques centaines de Hertz convient pour les signaux DeltaV, Vmax, Vmin et Temp. Cela facilite la transmission de ces signaux entre le pack de supercondensateurs 12 et le microcontrôleur 14, car des signaux dans cette bande de fréquence peuvent aisément être rendus peu sensibles aux agressions électromagnétiques (CEM) de type conduites ou rayonnées. Il en est de même pour l'influence de tensions de mode commun de type puissance entre le pack de supercondensateurs 12 et le microcontrôleur 14.

Transmission de signaux de tension :

Dans ce premier procédé de transmission, les informations DeltaV, Vmax, Vmin et Temp sont transmises de manière analogique par des niveaux de tension, avec une composante d'information utile et une composante de décalage. La composante de décalage correspond à un décalage de tension dans les signaux qui permet de détecter un défaut de continuité électrique dû par exemple à un câble débranché ou un support de transmission de signal détérioré. De plus, le décalage de tension permet de forcer le passage d'un courant de quelques milliampères dans les connecteurs, évitant ainsi des effets de corrosion de contact («fretting corrosion» en terminologie anglaise).

Par exemple, dans une forme de réalisation particulière, les informations DeltaV, Vmax, Vmin et Temp peuvent être transmises au moyen de signaux de tension V1, V2, V3 et V4 tels que définis ci-dessous :

$$V1 = 5.DeltaV + 1V,$$

$$V2 = Vmax + 1V,$$

$$V3 = Vmin + 1V,$$

$$V4 = Temp + 1V.$$

Une tension de décalage de +1V est introduite dans tous les signaux. Dans le signal V1, un gain G=5 est appliqué à DeltaV afin notamment de minimiser sur le signal utile (DeltaV) l'effet de bruits de mode commun entre le pack de supercondensateurs 12 et le microcontrôleur 14, la valeur de DeltaV étant typiquement inférieure à 100 mV. Aucun gain n'est introduit dans les signaux V2, V3 et V4 compte tenu des ordres de grandeur de Vmax, Vmin et Temp. Vmax et Vmin ont typiquement des ordres de grandeur d'environ 2,7 V et d'environ 1,4 V, respectivement, tandis que l'information de température Temp est mise à l'échelle qui convient par l'électronique de mesure de température (capteur CTN, capteur CTP, sonde platine ou autres capteurs de température).

Transmission de signaux de courant :

Dans ce second procédé de transmission, les informations DeltaV, Vmax, Vmin et Temp sont transmises de manière analogique par des niveaux de courant, avec une composante d'information utile et une composante de décalage. La composante de décalage correspond à un décalage de courant dans les signaux qui permet de détecter un défaut de continuité électrique dû par exemple à un câble débranché ou un support de transmission de signal détérioré. De plus, le décalage de courant permet de forcer le passage d'un faible courant dans les connecteurs évitant ainsi les effets de corrosion de contact («fretting corrosion» en terminologie anglaise).

Par exemple dans une forme de réalisation particulière, les informations DeltaV, Vmax, Vmin et Temp peuvent être transmises au moyen de signaux de courant I1, I2, I3 et I4 tels que définis ci-dessous :

$$I1 = DeltaV/200\Omega + 1mA,$$

$$I2 = Vmax/1k\Omega + 1mA,$$

$$I3 = Vmin/1k\Omega + 1mA,$$

$$I4 = Temp/1k\Omega + 1mA.$$

La valeur de résistance de 200Ω introduite dans I1 donne 5mA/V de déséquilibre en tension. Le décalage de courant de 1mA est généralement suffisant pour nettoyer un contact standard.

On notera de manière générale qu'un déséquilibre DeltaV > 1 V rend le pack de supercondensateurs pratiquement inutilisable. Il est donc possible de limiter la valeur maximale du courant I1 à une valeur relativement faible, ce qui permet d'assurer une protection efficace des entrées-sorties.

Pour I2, I3 et I4, compte tenu des ordres de grandeur de Vmax, Vmin et Temp, l'introduction d'une valeur de résistance de 1 kΩ s'est avérée satisfaisante.

Transmission de signaux modulés en largeur d'impulsion (MLI):

Dans ce troisième procédé de transmission, les informations utiles DeltaV, Vmax, Vmin et Temp sont convoyées par des porteuses modulées en largeur d'impulsion. Ces informations utiles sont donc contenues dans les valeurs des rapports cycliques des signaux transmis. On notera cependant que la génération d'un rapport cyclique précis et modulable en fonction d'une valeur analogique nécessite généralement l'utilisation d'un microcontrôleur. Ce qui signifie que ce procédé peut requérir pour sa mise en oeuvre la disponibilité d'un microcontrôleur dans les circuits électroniques 120 du pack de supercondensateurs 12. En contrepartie, la modulation MLI offre l'avantage d'une excellente résistance aux agressions CEM.

Bien entendu, l'invention ne se limite pas aux formes de réalisation particulières qui ont été décrites ici à titre d'exemple. Différentes variantes de réalisation pourront être réalisées par l'homme du métier selon les applications concernées. Ainsi, par exemple, dans certaines variantes, les signaux DeltaV, Vmax, Vmin et Temp pourraient être délivrés par le pack 12 sous une forme numérique, pour une transmission vers le microcontrôleur 14 par exemple sous une forme multiplexée temporellement. Un multiplexage temporel de signaux analogiques pour une transmission sur un même support de transmission de signal pourrait également trouver un intérêt dans certaines applications.

De plus, il est clair pour l'homme du métier que les fonctions de traitement réalisées par le microcontrôleur 14, relatives à la mise en oeuvre du procédé selon l'invention, peuvent être implémentées totalement ou partiellement dans d'autres microcontrôleurs ou microprocesseurs du système hybride comme ceux qui sont habituellement intégrés dans les convertisseurs alternatif-continu et continu-continu 11 et 13 ou bien dans des microprocesseurs ou microcontrôleurs du véhicule. En variante encore, les fonctions de traitement réalisées par le microcontrôleur 14, relatives à la mise en oeuvre du procédé selon l'invention, peuvent également être implémentées totalement ou partiellement dans les circuits électroniques 120 du pack de supercondensateurs.

**Revendications**

1. Procédé de pilotage d'un système micro-hybride à freinage récupératif pour véhicule, ledit système micro-hybride (1) comprenant une unité de stockage d'énergie électrique (12) et une unité de commande électronique (14), ladite unité de stockage d'énergie électrique (12) comprenant une pluralité de cellules élémentaires (C1 à C10) montées en série, le procédé comprenant les étapes de lire des tensions électriques élémentaires (V) desdites cellules élémentaires (C1 à C10), et déduire des informations d'état de l'unité de stockage d'énergie électrique (12) à partir desdites tensions élémentaires lues (V), lesdites informations d'état comprenant une information d'état de santé comportant une différence de tension (DeltaV = Vmax - Vmin) entre la cellule élémentaire la plus chargée (C2) et la cellule élémentaire la moins chargée (C9) de ladite unité de stockage d'énergie électrique (12), ladite information d'état de santé (DeltaV = Vmax - Vmin) étant représentative de l'aptitude de l'unité de stockage d'énergie électrique (12) à remplir sa fonction dans ledit système micro-hybride (1), et le procédé comprenant une étape de prendre en compte, dans ladite unité de commande électronique (14), lesdites informations d'état incluant ladite information d'état de santé (DeltaV = Vmax - Vmin) pour définir un pilotage optimal dudit système micro-hybride (1), **caractérisé en ce que** lesdites informations d'état comprennent une information de capacité différentielle (DeltaC) représentative d'un écart maximum de capacité électrique entre lesdites cellules élémentaires (C1 à C10).

2. Procédé selon la revendication 1, **caractérisé en ce que** lesdites informations d'état comprennent une tension élémentaire maximum (Vmax) provenant de la cellule élémentaire la plus chargée (C2).

3. Procédé selon la revendication 1 ou 2, **caractérisé en ce que** lesdites informations d'état comprennent une tension élémentaire minimum (Vmin) provenant de la cellule élémentaire la moins chargée (C9).

4. Procédé selon l'une quelconque des revendications 1 à 3, **caractérisé en ce que** lesdites informations d'état comprennent une mesure de la température (Temp) dans ladite unité de stockage d'énergie électrique (12).

5. Procédé selon la revendication 1, **caractérisé en**

**ce qu'**il comprend également les étapes de :

- mesurer pendant une durée prédéterminée (T) dans ladite unité de stockage d'énergie électrique (12) un courant prédéterminé (I=20A), et
- déduire, au terme de ladite durée prédéterminée (T), ladite information de capacité différentielle (DeltaC) à partir d'une différence de tension maximum (DeltaV) détectée entre lesdites tensions élémentaires lues (V) et à partir de ladite mesure de courant pendant ladite durée prédéterminée (T).

6. Procédé selon l'une quelconque des revendications 1 à 5, **caractérisé en ce que** lesdites informations d'état comprennent une information de résistance parasite différentielle (DeltaR) représentative d'un écart maximum de résistance parasite entre lesdites cellules élémentaires (C1 à C10).

7. Procédé selon la revendication 6, **caractérisé en ce qu'**il comprend également les étapes de :

- déduire une première différence de tension maximum (DeltaV$_1$) entre lesdites cellules élémentaires (C1 à C10) à partir desdites tensions élémentaires lues (V) lorsque aucun courant significatif ne circule dans ladite unité de stockage d'énergie électrique (12),
- injecter dans ladite unité de stockage d'énergie électrique (12) un courant prédéterminé (I=200A) pendant une durée courte prédéterminée (t),
- déduire une seconde différence de tension maximum (DeltaV$_2$) entre lesdites cellules élémentaires (C1 à C10) à partir desdites tensions élémentaires lues (V) pendant ladite injection de courant, et
- déduire ladite information de résistance parasite différentielle (DeltaR) à partir d'une différence (DeltaV$_2$ - DeltaV$_1$) entre lesdites première et seconde différences de tension et à partir de la valeur d'intensité (I=200A) dudit courant de durée courte.

8. Procédé selon l'une quelconque des revendications 1 à 7 pour le pilotage d'un système micro-hybride à freinage récupératif dans lequel ladite unité de stockage d'énergie électrique (12) comprend une pluralité d'éléments supercondensateurs (C1 à C10) montés en série en tant que dites cellules élémentaires.

9. Unité de stockage d'énergie électrique, **caractérisée en ce qu'**elle comprend des moyens aptes à une mise en oeuvre du procédé selon les revendications 1 à 8.

10. Système micro-hybride à freinage récupératif pour véhicule, **caractérisé en ce qu'**il comprend des moyens aptes à une mise en oeuvre du procédé selon l'une quelconque du revendications 1 à 8.

11. Système micro-hybride à freinage récupératif pour véhicule, **caractérisé en ce qu'**il comprend une unité de stockage d'énergie électrique (12) selon la revendication 9.

12. système micro-hybride à freinage récupératif pour véhicule selon la revendication 10 ou 11, **caractérisé en ce qu'**il comprend au moins une unité de commande électronique (14) apte à traiter des informations d'état (DeltaV, Vmax, Vmin, Temp, DeltaC, DeltaR) déduites par la mise en oeuvre du procédé selon l'une quelconque des revendications 1 à 8.

13. Système micro-hybride à freinage récupératif pour véhicule selon l'une quelconque des revendications 10 à 12, **caractérisé en ce qu'**il comporte, outre lesdites unité de stockage d'énergie électrique (12) et unité de commande électronique (14), une machine électrique tournante (10), un convertisseur alternatif-continu (11) et un convertisseur continu-continu (13).

14. Système micro-hybride à freinage récupératif pour véhicule selon la revendication 13, **caractérisé en ce** ladite unité de commande électronique (14) est comprise au moins partiellement dans ledit convertisseur alternatif-continu (11) et/ou ledit convertisseur continu-continu (13).

**Claims**

1. Method for driving a micro-hybrid system with regenerative braking for vehicles, said micro-hybrid system (1) comprising an electrical energy storage unit (12) and an electronic control unit (14), said electrical energy storage unit (12) comprising a plurality of individual cells (C1 to C10) connected in series, the method comprising steps for reading individual electrical voltages (V) of said individual cells (C1 to C10) and deducing information concerning the state of the electrical energy storage unit (12) from said individual voltages (V) read, said state information comprising a state-of-health information item comprising a voltage difference (DeltaV = Vmax-Vmin) between the most charged individual cell (C2) and the least charged individual cell (C9) of said electrical energy storage unit (12), said state-of-health information item (DeltaV = Vmax - Vmin) being representative of the capacity of the electrical energy storage unit (12) to fulfil its function in said micro-hybrid system (1), and the method comprising a step for taking into account, in said electronic control unit (14), said state information including said state-of-health information item (DeltaV = Vmax - Vmin) to define an optimal driving of said micro-hybrid system (1), **characterized in that** said state information comprises a differential capacity information item (DeltaC) representative of a maximum electrical capacity difference between said individual cells (C1 to C10).

2. Method according to Claim 1, **characterized in that** said state information comprises a maximum individual voltage (Vmax) originating from the most charged individual cell (C2).

3. Method according to Claim 1 or 2, **characterized in that** said state information comprises a minimum individual voltage (Vmin) originating from the least charged individual cell (C9).

4. Method according to any one of Claims 1 to 3, **characterized in that** said state information comprises a measurement of the temperature (Temp) in said electrical energy storage unit (12).

5. Method according to Claim 1, **characterized in that** it also comprises steps for:

    - measuring, for a predetermined time (T) in said electrical energy storage unit (12), a predetermined current (I = 20A), and
    - deducing, at the end of said predetermined time (T), said differential capacity information (DeltaC) from a maximum voltage difference (DeltaV) detected between said individual voltages (V) read and from said current measurement during said predetermined time (T).

6. Method according to any one of Claims 1 to 5, **characterized in that** said state information comprises a differential spurious resistance information item (DeltaR) representative of a maximum spurious resistance difference between said individual cells (C1 to C10).

7. Method according to Claim 6, **characterized in that** it also comprises steps for:

    - deducing a first maximum voltage difference (DeltaV$_1$) between said individual cells (C1 to C10) from said individual voltages (V) read when no significant current is circulating in said electrical energy storage unit (12),
    - injecting into said electrical energy storage unit (12) a predetermined current (I = 200A) for a predetermined short time (t),
    - deducing a second maximum voltage difference (DeltaV$_2$) between said individual cells (C1 to C10) from said individual voltages (V) read during said current injection, and

- deducing said differential spurious resistance information item (DeltaR) from a difference (DeltaV$_2$ -Delta V$_1$) between said first and second voltage differences and from the intensity value (I = 200A) of said current of short duration.

8. Method according to any one of Claims 1 to 7 for driving a micro-hybrid system with regenerative braking in which said electrical energy storage unit (12) comprises a plurality of ultracapacitor elements (C1 to C10) connected in series as said individual cells.

9. Electrical energy storage unit, **characterized in that** it comprises means suitable for implementing the method according to Claims 1 to 8.

10. Micro-hybrid system with regenerative braking for vehicles, **characterized in that** it comprises means suitable for implementing the method according to any one of Claims 1 to 8.

11. Micro-hybrid system with regenerative braking for vehicles, **characterized in that** it comprises an electrical energy storage unit (12) according to Claim 9.

12. Micro-hybrid system with regenerative braking for vehicles according to Claim 10 or 11, **characterized in that** it comprises at least one electronic control unit (14) suitable for processing state information (DeltaV, Vmax, Vmin, Temp, DeltaC, DeltaR) deduced by the implementation of the method according to any one of Claims 1 to 8.

13. Micro-hybrid system with regenerative braking for vehicles according to any one of Claims 10 to 12, **characterized in that** it comprises, in addition to said electrical energy storage unit (12) and electronic control unit (14), a rotating electric machine (10), an AC-DC converter (11) and a DC-DC converter (13).

14. Micro-hybrid system with regenerative braking for vehicles according to Claim 13, **characterized in that** electronic control unit (14) is included at least partially in said AC-DC converter (11) and/or said DC-DC converter (13).

**Patentansprüche**

1. Verfahren zum Steuern eines Mikrohybrid-Systems mit rekuperativer Bremse für Fahrzeug, wobei das Mikrohybrid-System (1) eine Einheit (12) zum Speichern elektrischer Energie und eine elektronische Steuereinheit (14) umfasst, wobei die Einheit (12) zum Speichern elektrischer Energie mehrere Elementarzellen (C1 bis C10), die in Reihe geschaltet sind, enthält, wobei das Verfahren die folgenden Schritte umfasst: Lesen elementarer elektrischer Spannungen (V) der Elementarzellen (C1 bis C10) und Ableiten von Informationen über den Zustand der Einheit (12) zum Speichern elektrischer Energie anhand der gelesenen Elementarspannungen (V), wobei diese Zustandsinformationen eine Zustandsinformation über die Funktionsfähigkeit enthalten, die eine Spannungsdifferenz (DeltaV = Vmax - Vmin) zwischen der am stärksten geladenen Elementarzelle (C2) und der am wenigstens geladenen Elementarzelle (C9) der Einheit (12) zum Speichern elektrischer Energie enthält, wobei die Zustandsinformation über die Funktionsfähigkeit (DeltaV = Vmax - Vmin) die Eignung der Einheit (12) zum Speichern elektrischer Energie für die Erfüllung ihrer Funktion in dem Mikrohybrid-System (1) repräsentiert, wobei das Verfahren einen Schritt umfasst, um in der elektronischen Steuereinheit (14) die Zustandsinformationen zu berücksichtigen, die die Zustandsinformation über die Funktionsfähigkeit (DeltaV = Vmax - Vmin) enthalten, um die optimale Steuerung des Mikrohybrid-Systems (1) zu definieren, **dadurch gekennzeichnet, dass** diese Zustandsinformationen eine Information über die differentielle Kapazität (DeltaC) enthalten, die einen maximalen Abstand der elektrischen Kapazität zwischen den Elementarzellen (C1 bis C10) repräsentiert.

2. Verfahren nach Anspruch 1, **dadurch gekennzeichnet, dass** die Zustandsinformationen eine maximale Elementarspannung (Vmax) enthalten, die von der am stärksten geladenen Elementarzelle (C2) stammt.

3. Verfahren nach Anspruch 1 oder 2, **dadurch gekennzeichnet, dass** die Zustandsinformationen eine minimale Elementarspannung (Vmin) enthalten, die von der am wenigsten geladenen Elementarzelle (C9) stammt.

4. Verfahren nach einem der Ansprüche 1 bis 3, **dadurch gekennzeichnet, dass** die Zustandsinformationen ein Maß der Temperatur (Temp) in der Einheit (12) zum Speichern elektrischer Energie enthalten.

5. Verfahren nach Anspruch 1, **dadurch gekennzeichnet, dass** es außerdem die folgenden Schritte umfasst:

    - Messen eines vorgegebenen Stroms (I = 20 A) während einer vorgegebenen Dauer (T) in der Einheit (12) zum Speichern elektrischer Energie und
    - Ableiten der Information (DeltaC) über die differentielle Kapazität anhand einer zwischen den gelesenen Elementarspannungen (V) detektierten maximalen Spannungsdifferenz (DeltaV) und anhand des während der vorgegebenen Dauer (T) gemessenen Stroms am Ende der vorgegebenen Dauer (T).

6. Verfahren nach einem der Ansprüche 1 bis 5, **dadurch gekennzeichnet, dass** die Zustandsinformationen eine Information über den differentiellen parasitären Widerstand (DeltaR) enthalten, die einen maximalen Abstand des parasitären Widerstands zwischen den Elementarzellen (C1 bis C10) repräsentiert.

7. Verfahren nach Anspruch 6, **dadurch gekennzeichnet, dass** es außerdem die folgenden Schritte umfasst:

    - Ableiten einer ersten maximalen Spannungsdifferenz (DeltaV$_1$) zwischen den Elementarzellen (C1 bis C10) anhand der gelesenen Elementarspannungen (V), wenn kein signifikanter Strom in der Einheit (12) zum Speichern elektrischer Energie fließt,
    - Einleiten eines vorgegebenen Stroms (I = 200 A) in die Einheit (12) zum Speichern elektrischer Energie während einer vorgegebenen kurzen Dauer (t),
    - Ableiten einer zweiten maximalen Spannungsdifferenz (DeltaV$_2$) zwischen den Elementarzellen (C1 bis C10) anhand der gelesenen Elementarspannungen (V) während der Stromeinleitung und
    - Ableiten der Information über den differentiellen parasitären Widerstand (DeltaR) anhand einer Differenz (DeltaV$_2$ - DeltaV$_1$) zwischen der ersten und der zweiten Spannungsdifferenz und anhand des Intensitätswerts (I = 200 A) des Stroms mit kurzer Dauer.

8. Verfahren nach einem der Ansprüche 1 bis 7 für die Steuerung eines Mikrohybrid-Systems mit rekuperativer Bremse, in dem die Einheit (12) zum Speichern elektrischer Energie mehrere Superkondensatorelemente (C1 bis C10) enthält, die als die genannten Elementarzellen in Reihe geschaltet sind.

9. Einheit zum Speichern elektrischer Energie, **dadurch gekennzeichnet, dass** sie Mittel umfasst, die das Verfahren nach den Ansprüchen 1 bis 8 ausführen können.

10. Mikrohybrid-System mit rekuperativer Bremse für Fahrzeug, **dadurch gekennzeichnet, dass** es Mittel umfasst, die das Verfahren nach einem der Ansprüche 1 bis 8 ausführen können.

11. Mikrohybrid-System mit rekuperativer Bremse für Fahrzeug, **dadurch gekennzeichnet, dass** es eine Einheit (12) zum Speichern elektrischer Energie nach Anspruch 9 umfasst.

12. Mikrohybrid-System mit rekuperativer Bremse für Fahrzeug nach Anspruch 10 oder 11, **dadurch gekennzeichnet, dass** es wenigstens eine elektronische Steuereinheit (14) umfasst, die Zustandsinformationen (DeltaV, Vmax, Vmin, Temp, DeltaC, DeltaR) verarbeiten kann, die durch Ausführen des Verfahrens nach einem der Ansprüche 1 bis 8 abgeleitet werden.

13. Mikrohybrid-System mit rekuperativer Bremse für Fahrzeug nach einem der Ansprüche 10 bis 12, **dadurch gekennzeichnet, dass** es neben der Einheit (12) zum Speichern elektrischer Energie und der elektronischen Steuereinheit (14) eine rotierende elektrische Maschine (10), einen Wechselspannungs/Gleichspannungs-Umsetzer (11) und einen Gleichspannungs/Gleichspannungs-Umsetzer (13) umfasst.

14. Mikrohybrid-System mit rekuperativer Bremse für Fahrzeug nach Anspruch 13, **dadurch gekennzeichnet, dass** die elektronische Steuereinheit (14) wenigstens teilweise in dem Wechselspannungs/Gleichspannungs-Umsetzer (11) und/oder in dem Gleichspannungs/Gleichspannungs-Umsetzer (13) enthalten ist.

FIG.1

12

C1

↑ V

120

Vmax

C2

C3

↑ V

1201

C9

Vmin

C10

↑ V

DeltaV, Vmax, Vmin, Temp

FIG.2

1214

Vers 14

EP 2 160 312 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020140405 A